# EUROPEAN PATENT SPECIFICATION

(11) **EP 0 510 918 B1**
(45) Date of publication and mention of the grant of the patent: **02.12.1998**
(21) Application number: 92303569.5
(22) Date of filing: 22.04.1992
(51) Int. Cl.: B22F 9/04, C22C 1/04, B02C 17/00

(54) **A method and apparatus for producing a hydrogen absorption alloy**
Verfahren und Vorrichtung zur Herstellung einer Wasserstoffabsorptionslegierung
Procédé et installation pour la préparation d'un alliage d'absorption d'hydrogène

(30) Priority: 23.04.1991 JP 122054/91
(43) Date of publication of application: 28.10.1992
(73) Proprietor: KURIMOTO LIMITED, Nishi-ku, Osaka (JP)
(72) Inventor: Kantaro, Kaneko, Osaka (JP); Teruya, Okada, Osaka (JP); Masaru, Ogata, Osaka (JP)
(74) Representative: Meddle, Alan Leonard

(56) References cited:
- EP-A- 0 209 179
- FR-A- 2 056 940
- US-A- 4 859 413
- US-A- 4 915 898
- INT. J. HYDROGEN ENERGY vol. 10, no. 3, 1985, pages 169 - 178 SONG ET AL. 'Hydriding Properties of a Mechanically Alloyed Mixture with a Composition Mg2Ni'
- J. Less. Common Metals 131(1987),p.181-189
- Mat. Sci. Techn. 15(1991),p.204-206
- Mat. Scie. Eng. A135, (1991), p. 291-293.
- Colloq. Phys. (France) Colloque de Physique, C-71-C77.

## Description

The present invention relates to a method for producing a hydrogen absorption alloy.

Various techniques have been developed in which hydrogen is absorbed in a certain metals or alloys in the form of a metal hydride to be stored therein and transferred therefrom. These techniques have been applied to such practical uses as the purification of hydrogen, heat pumps, air conditioning systems, etc. In such practical applications, because an exothermic reaction or an endothermic reaction takes place when a metal hydride absorbs or discharges hydrogen, such reactions can be utilized in a heat exchanger, a heat pump and the like.

Several combinations of metals forming hydrogen absorption alloys have been proposed to date and some of these have actually been put into practical use. The combinations of metals are Mg-Ni, Mg-Cu, Ca-Ni, Fe-Ti, Ti-Mn, La-Ni, mischmetal-Ni, etc. A large number of other alloys composed of different metals substituted for a part of the above-mentioned metals have also been disclosed including: Mg₂Ni_{0.75}Cr_{0.25},TiFe_{0.8}Mn_{0.2},Ca_{0.7}Mn_{0.3}Ni₅,LaNi_{4.7},A1_{0.3}.

Generally speaking, a hydrogen absorption alloy is produced by alloying one or more metals selected from a group formed by Mg, Ca, La, Mischmetal, Ti, etc. with one or more metals selected from a group formed by Ni, Al, V, Cr, Fe, Co, Zn, Cu, Mn, etc.

To produce a hydrogen absorption alloy, the different kinds of metal used are dissolved in a high frequency induction furnace or an arc type high temperature melting furnace. The high frequency induction furnace is suitable for mass production but it is essential that this furnace employs an inert atmosphere using Ar gas or the like to prevent the metals from oxidising because some of the metals, in particular, Mg, Ca, Al, etc. have high vapour pressures when vapourised and have a strong affinity to oxygen.

After an alloy of desired composition has been obtained through the steps of dissolving the metals together and processed at high temperature, then a casting is performed in a metal mould in a non-oxidizing atmosphere to obtain an ingot. The ingot is then subjected to heat treatment and after completely forming a solid alloy, the alloy is crushed in a crusher under a non-oxidising atmosphere, whereby fine particles of hydrogen absorption alloy of a desired particle size are obtained. A method of obtaining an alloy of a desired composition in a solid state without dissolution has also been proposed. This method is generally called a "Mechanical Alloying Process" and was originally developed by Benjamin of INCO of U.S.A. in the 1970s. In this process mechanical energy is applied to fine metal particles by means of a high energy ball mill (Attritor) and the ultra-fine particles produced are dispersed by repeated cold press fitting and breakdown.

It is generally understood that the mechanical alloying process comprises the following steps : forming fine particles by milling, causing the fine particles to be flattened and flaked; breaking down or peeling the hardened particles and repeating cold forge welding (kneading); growing lamella structure between the components of the alloy thereby rapidly forming fine crystal grains so that the particles of one metal are dispersed within those of the other metal;

M.Y. Song and E.I. Ivanov published the results of an experiment on alloying fine particles of Mg and Ni using a mechanical alloying process employing a planetary ball mill (Hydrogen Energy Vol 10 No. 3 P.169-178, 1985).

It was reported that, in this experiment, the acceleration of the planetary ball mill was established to be 6.1G. A carbonyl type Ni was mixed with Mg in an atmosphere of Ar gas for 30 minutes to obtain samples. The samples were then subject to various hydrogen treatments and comparatively discussed after x-ray diffraction. According to the report, it was acknowledged that among the samples on which hydrogen treatment is repeated between 1 and 58 times, phases of Mg₂Ni, and a very small amount of Mg0, Mg, Ni were detected. Therefore, heat treatment (annealing) was applied thereto.

In the samples in which hydrogen treatment was repeated more than 58 times, most of the Mg and Ni is transformed to Mg₂Ni. As a result of this, it was reported that heat treatment was more effective than the repetition of hydrogen treatment. Thus, a method of producing a hydrogen absorption alloy without depending upon dissolution was disclosed for the first time, though it was not a perfect method.

I.G. Konstanchuk, E. M. Ivanov, M. Pezat, B. Darriet, V. V. Boldtrev and P. Hagenmuller later published the results of experiments to ascertain the hydriding properties of a mechanical alloy with composition Mg - 25%Fe in the Journal of the Less-Common Metals, 131 (1987) 181-189. This reference states that the mechanical alloy samples were obtained by treating a mixture of magnesium powder and iron powder in a planetary mill operated at an acceleration of 600 m.s.⁻² under argon for approximately 5 minutes.

An article in the Journal of Material Science and Engineering, A135 (1991) by E. Gaffet entitled "Ball Milling:on E-V-T parameter phase diagram" reports on experimental investigations into planetary ball milling process parameters. The experiments were conducted with the planetary mill operating such that the vial holders or mill pots moved clockwise about the main axis of the mill and anti-clockwise about their own axes. The vial holders contained melt-spun ribbon pieces of mean composition Ni_{58.8} Zr_{41.2} corresponding to the Ni₁₀ Zr₇ intermetallic phase. This report does not disucss particular operation modes or apparatus suitable for the preparation of hydrogen absorption alloys.

FR-2,056, 940 discloses a planetary mill which is capable of being operated such tat each mill pot rotates about is own axis in the same direction as it moves around the main axis of the mill.

It is well known that the production of a hydrogen absorption alloy by the conventional method of including the step of dissolution needs a very high level of skill as well as sufficiently controllable equipment. For example, in the case of producing Mg₂Ni, the vapour pressure of Ni fluctuates from the high level of 2057 mmHg at 10°C to 2732 mmHg at 760°C, and Mg fluctuates from 743 mmHg to 1107 mmHg. Ca fluctuates similarly from 983 mmHg to 1487 mmHg. Under such wide ranges of fluctuation, it is very difficult to increase the furnace temperature whilst keeping the vapour pressure well-balanced. From the viewpoint of dissolution, the fact of whether the degree of solid solution of both components is high or low may influence the difficulty of producing the alloy but what is most important is the difference between the two components in their respective densities and melting points. These are 8.90 g/cm³ and 1455 °C for Ni, 1.74 g/cm³ and 650°C for Mg, and 1.55 g/cm³ and 850°C for Ca, which clearly shows the difficulty in alloying Mg or Ca with Ni.

The density and melting point of La is 6.15g/cm³ and 826°C. The density of La is approximately that of Ni and reduces the difficulty to a certain extent. However, rare earth metals such as La are very precious and expensive resources.

A serious problem in alloying Mg and Ni is that the vapour pressure of Mg reaches approximately 19000mmHg when Ni is near its melting point and because of the high vapour pressure it is difficult to prevent molten metal from vaporising and bringing about excess Ni, eventually resulting in a product wherein the MgNi₂ is not fully hydrated. If excessive quantities of Mg are mixed to prevent such a problem there arises the different problem of the production of separate single substances of Mg, of which the chemical structure is nominally Mg_{2.35}Ni but is actually Mg₂Ni+Mg_{0.35}.

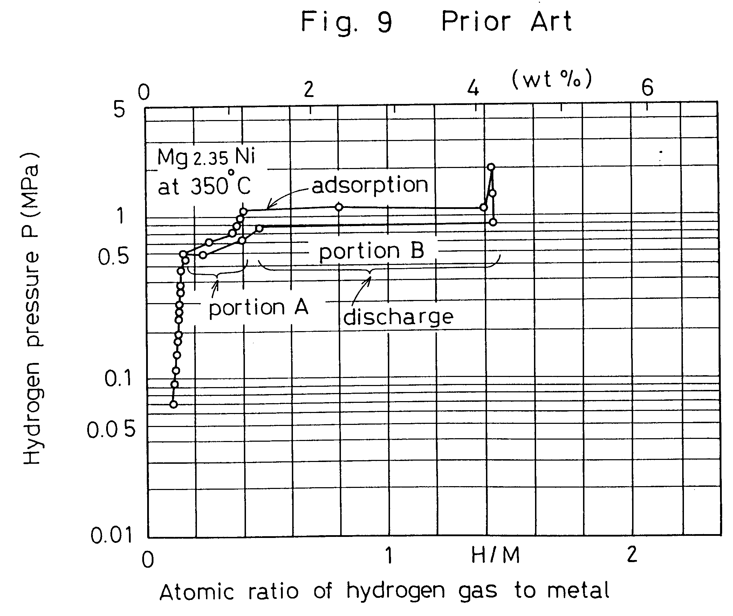

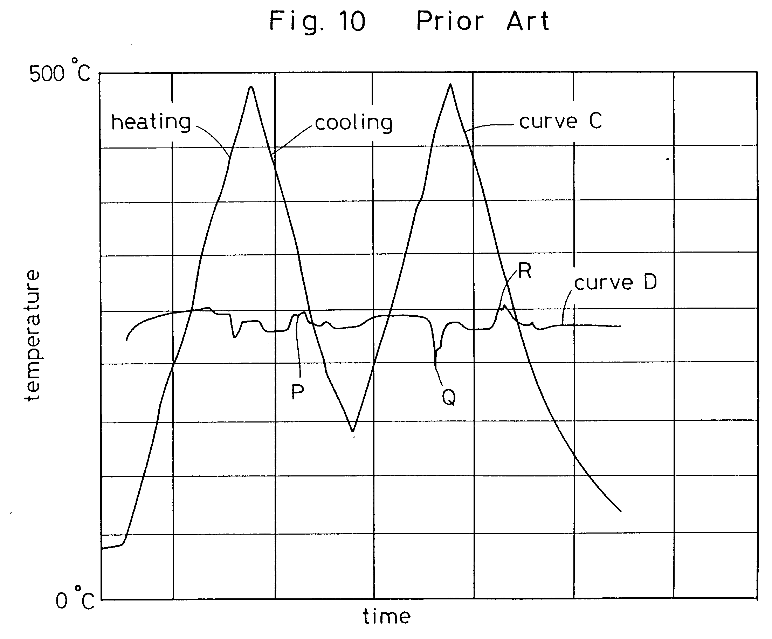

The above mentioned problems all affect the characteristics of the hydrogen absorption alloy which is obtained as described hereunder with reference to Figures 9 and 10.

Figure 9 is a pressure-composition isothermal line diagram (hereinafter referred to as "PCT line diagram") of a hydrogen absorption alloy Mg_{2.35}Ni obtained by the method including the dissolving step (hereinafter referred to as the "dissolving method"). in this graph, the y-axis indicates hydrogen pressure P (in MPa) and the x-axis indicates the atomic ratio H/M of hydrogen gas to metal so as to show the behaviour of the atomic ratio according to the absorption and discharge of hydrogen gas at a fixed temperature (350°C).

The diagram indicates that the when hydrogen gas to metal ratio H/M has reached nearly 0.5%wt, both absorption and discharge are clearly divided into a portion A of a gentle inclination rightward and a portion B of an almost horizontal line also rightward. The portion A shows the absorption and discharge of hydrogen in and from single phase Mg and the portion B shows the absorption and discharge of hydrogen in and from Mg₂Ni. In other words, the existence of the portion A means that Mg is combining with hydrogen gas and that Mg, which has a far lower affinity that Mg₂Ni to hydrogen, is contained in the alloy, resulting in a lower performance hydrogen absorption alloy.

Figure 10 is a high pressure thermal difference analysis diagram (hereinafter referred to as a "DTA line diagram") of the same sample as Figure 9, and in which the y-axis indicates the temperature and the x-axis indicates time. Curve C shows temperatures obtained by measuring Mg_{2.35}Ni in a container after sealing hydrogen of a certain pressure (1.1 MPa) in the container, heating the container from the outside to 500°C and then cooling the container down from 500 °C. Curve D shows the temperature difference generated between the sample and a reference sample (alumina) placed in the container for comparison. Since an exothermic reaction takes place when the hydrogen gas is absorbed and an endothermic reaction takes place when hydrogen is discharged, a sharp trough corresponding to the discharge is seen at the time of heating while a peak corresponding to the absorption is seen at the time of cooling, in the curve D. However, on careful examination it is found that each peak is in the form of a double peak or refracting points similar to double peaks and not of a single peak form as indicated by points P, Q and R in Figure 10. This means that phase changes take place not only between Mg₂Ni and Mg₂NiH₄ but also between Mg and MgH₂. The phase change between Mg and MgH₂ occurs because Mg dissociates more easily at higher temperatures than Mg₂Ni under the same hydrogen pressure.

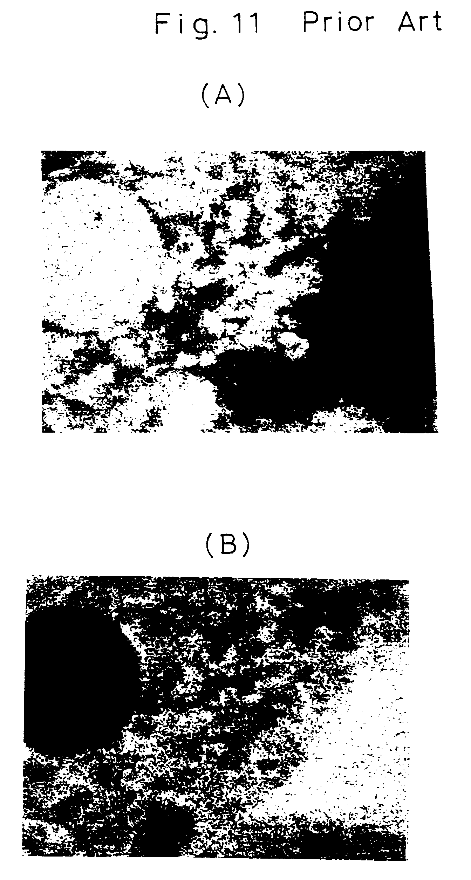

Figures 11(a) and (b) further support the above fact. Figure 11(a) is a mapping diagram of Ni and Figure 11 (b) is the same diagram of Mg both prepared by electronic probe microanalyzer.

In Figure 11 (a) white portions represent the existence of Ni. The greater the density of white dots, the more Ni exists, whilst the black portions show the absence of Ni. In Figure 11 (b) the white portions show the existence of Mg, whilst the black portions show the absence of Mg.

In figures 11(a) and (b), the distribution of Ni and Mg is not even but partial, which means that the alloying of Mg₂Ni is only partial, resulting in the existence of single phase Mg and Ni.

Thus, a serious disadvantage of the hydrogen absorption alloy produced by the above-mentioned dissolving method exists as the components which are detrimental to the quality of the alloy are still present. There is also the disadvantage of the difficulty in performing this production method.

On the other hand, attempts to obtain Mg₂Ni by the so-called mechanical alloying method, instead of using the dissolving method mentioned above, gave a suggestion of a certain amount of technical feasibility. It was recognized, however, that after repeating hydrogeneration and dehydrogeneration of a sample alloy under the conditions of 0.7 MPa and 300°C, single phase Mg or Ni did not disappear after simply repeating hydrogeneration several times but the sample alloy could be almost entirely transformed to Mg₂Ni only after completing heat treatment (annealing) in which the temperature was kept between 270 to 300°C for about two months and repeating hydrogeneration 58 times. Though this method is called a mechanical alloying method, the state of the art has not yet reached a satisfiable level for alloying different kinds of metal. It may be a reasonable evaluation that this method still remains at a level wherein metal oxides are simply dispersed in the form of ultra-fine particles in metal particles, or the phase of the original metal material is changed to a different one (amorphous phase, for example).

The present invention was made to solve the above discussed problems. An object of the present invention is to provide a method for producing a hydrogen absorption alloy of high alloying percentage from two or more kinds of base metals without involving the step of dissolving them.

To accomplish the foregoing object, a method for producing a hydrogen absorption alloy of high alloying percentage in accordance with the invention comprises the steps of: placing fine particles of two or more kinds of metals adapted for alloying to form a hydrogen absorption alloy into one or more mill pots of a high speed planetary mill, providing the internal part of the or each mill pot with a non-oxidising atmosphere and applying an acceleration of more than 30 times the acceleration due to gravity to the or each ball mill for mixing, milling and dispersement of the fine particles, wherein milling balls are placed together with the fine particles in the or each mill pot, and the mill is operated such that a main shaft thereof rotates in a first direction and the or each mill pot rotates around its own axis in said first direction, the ratio R of the relative angular velocity of rotation of the or each mill pot ω₂ to the angular velocity of rotation of the main shaft ω₁, is in the range of 0.5 to 1.5.

It is preferable that the non-oxidizing atmosphere is provided by filling the mill pots with either Ar gas, He gas or N₂ gas.

It is also preferable that one or more of the two or more kinds of metals is selected from the group including Mg, Ca, La, mischmetal and Ti, while the remaining one or more of the two of more kinds of metals is selected from the group including Ni, Al, V, Cr, Fe, Co, Zr, Cu, and Mn.

Apparatus for carrying out the method of the present invention comprises a high speed planetary ball mill having one or more mill pots and means for providing the or each mill pot with a non-oxidising atmosphere, the or each mill pot having means to follow the rotation in a first direction of a main shaft and means to rotate on its own axis such that the angular velocity ratio R of the revolution of the main shaft to the rotation of the or each mill pot is in the range of 0.5 to 1.5, wherein the apparatus is a batch type mill and said means to rotate is adapted to rotate the or each mill pot on its own axis in said first direction at a composite acceleration ratio G applied to the internal part of the or each mill pot which is at least 30, the composite milling acceleration ratio G being expressed by:${\text{G= a max/g = (ω}}_{\text{1}} {\text{)}}^{\text{2}} {\text{/ [2g (K+N) (1+R}}^{\text{2}} \text{)]}$ where
- G :: composite milling acceleration ratio;
- a max :: composite milling acceleration (m/s²);
- g :: acceleration of gravity (m/s²);
- ω ₁ :: angular velocity of revolution of the main shaft(1/s);
- K :: a revolutional diameter (m);
- N :: internal diameter of mill pot (m);
- ω ₂ :: a relative angular velocity of rotation of each mill pot with respect to the revolution of the main shaft (1/s); and
- R :: ω₂ / ω₁.

Since, in the production method according to the invention, two or more kinds of metals forming the hydrogen absorption alloy are alloyed without dissolving them in a furnace, the method may be said to be a type of mechanical alloying method. As a matter of fact, however, a considerably larger acceleration than those of conventional ball mills is applied to the mill pots, whereby an alloy of higher alloying percentage than that obtained by the prior method was achieved. Since this acceleration is established to be at least 30 times as large as the gravitational acceleration, which is an essential requirement for successively carrying out the production method of the invention, then the apparatus for carrying out the production method of this invention should satisfy this requirement.

Although the most desirable process of mechanical alloying has not been completely established yet and is still under research and development, it is generally said that there are two essential requirements, i.e., that sufficient diffusion of atoms takes place and that the enthalpy ΔHm in the mixture is negative and large. It is natural that, when applying large amounts of energy effectively the diffusion of atoms at a low temperature is more advanced. In the conventional mechanical alloying method, the fine particles undergo a series of processes of flattening, flaking, cold forge welding ( kneading), growing lamella structure, dispersing and randomization, as mentioned above. On the other hand, in the present invention, it may be said that the alloying has advanced to the stage of strong atomic combination.

As mentioned above, it is an advantage of the present invention that the hydrogen absorption alloy can be produced without dissolving metal materials and the alloy obtained contains only effective alloy components which facilitate a speedy phase change to a hydride and does not contain any other single phase metal. Accordingly, the reaction with hydrogen is fast and the associated discharge reaches almost its theoretical value. As a result, when applying the invention to various kinds of uses, the invention is superior to the prior art. Furthermore, since considerable production costs are saved compared with the prior art method, which require the dissolving step, the hydrogen absorption alloy can be produced without using expensive La. Thus, significant advantages are obtained due to the improvements in quality and economy.

Other objects, features and advantages of the invention will become apparent in the course of the following description with reference to the accompanying drawings.

In order that the invention may be more easily understood, an embodiment thereof will now be described, by way of example, with reference to the accompanying drawings, in which;
Figure 1 is a side view of an apparatus used to embody the method according to the present invention;
Figure 2 is a schematic diagram showing the movement of the apparatus;
Figures 3 (a), (b) and (c) show the movement of the balls and the relative ratio of angular velocities between the rotation of each mill pot and revolution of the main shaft;
Figure 4 is a PCT line diagram of a sample produced according to the method of the present invention;
Figure 5 is a DTA line diagram of the same sample;
Figure 6 (a) shows the analytical results of a standard (reference) sample made from the same components as the sample, and Figures (b) and (c) show the analytical results of standard samples of Mg₂Ni and Mg respectively by x-ray analysis;
Figures 7 (a) and (b) are microphotographs of a metal structure taken by electronic probe microanalyzer and showing the manner of distribution (diffusion) of Ni and Mg respectively in the same sample;
Figure 8 is a diagram showing the technical advantages of the invention;
Figure 9 is a PCT line diagram of a sample produced according to the prior art; and
Figure 10 is a DTA line diagram of the same sample as Figure 9;
Figures 11 (a) and (b) are microphotographs of a metal structure taken by electronic probe microanalyzer and showing the manner of distribution of Ni and Mg respectively in a sample produced according to the prior art.

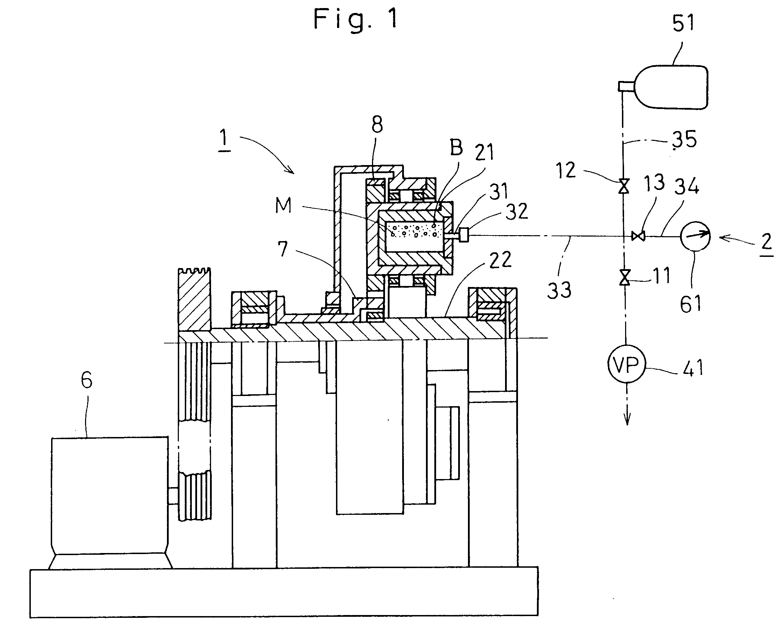

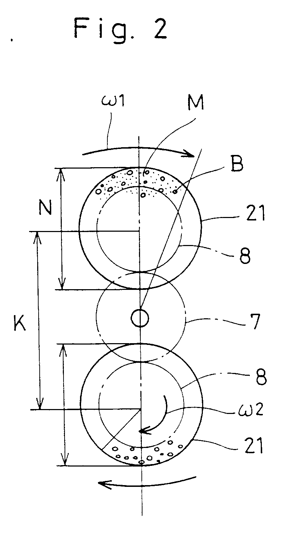

Figures 1 and 2 show a planetary ball mill 1 of batch type which is an essential requirement of the production method of the present invention.

Describing first the general construction of the planetary ball mill 1 with reference to Figures 1 and 2, a plurality of mill pots 21, revolving about a main shaft rotated by a motor 6, are disposed evenly about a circumference defined by a radial distance from the main shaft 22. It is to be noted that each mill pot rotates on its own axis. A planetary gear 8 is disposed on the outer periphery of the mill pot 21 which rotates following the main shaft 22, and a sun gear 7 mating with this planetary gear 8 independently rotates or stops (figure 2 shows a stopped state), thus, the mill pot 21 is caused to revolve about the main shaft while rotating on its own axis. The sun gear 7 is mounted on the main shaft 22. Milling balls B which act as the milling medium and fine metal particles M are both received in each millpot 21 and the internal atmosphere of the mill pot 21 is substituted with an inert gas such as Ar in order to prevent the fine metal particles M under treatment from oxidising.

An atmosphere adjusting means 2, substitutes Ar gas for the air in the mill pots 21 by the method comprising the steps of: attaching a pipe 31 to a cap of the mill pot 21; mounting a pair of one-touch couplers 32 on one end of the pipe; and connecting the pipe 31 to a vacuum pump 41 through a pipe 33 and a valve 11, to a pressure gauge 61 through a valve 13 and a pipe 34 and to a cylinder filled with Ar gas through a pipe 35 and a valve 12. Vacuum suction is performed by the vacuum pump 41 with valve 12 fully closed whilst fully opening the valves 11 and 13 thus existing air in the mill pot 21 to be taken out. After checking the pressure gauge 61 to ensure that the pressure has reached a predetermined valve, the valve 11 is fully closed and then the valve 12 is opened.

The mill pot 21 is then filled with Ar gas from the Ar gas cylinder 51. Then after checking that the pressure of the Ar gas in the mill pot 21 has reached the same level as atmospheric pressure or any other predetermined pressure, the valve 12 is also fully closed and the pipe 31 is separated from the pipe 33 at the one-touch couplers 32. The Ar gas in the mill pot 21 is contained by the remaining one-touch coupler 32. The foregoing Ar gas filling operation is performed one or more times.

After introducing the milling balls B and the fine metal particles M into the mill pot 21 and filling the mill pot 21 with Ar gas, the planetary ball mill 1 is put into operation. The centrifugal force and the Coriolis force produced by the rotation of the mill pot 21 and the revolution of the main shaft 22 act together on the milling balls B and the fine metal particles M, thus treating the fine metal particles M.

Figure 2 is a schematic view of the motion of a mill pot in the planetary ball mill in which ω₁ indicates the angular velocity (revolutions per second) of revolution of the main shaft 22, the revolutional diameter K is set to 0.52m, the internal diameter N of the mill pot is set to 0.075m, ${\text{R=ω}}_{\text{2}} {\text{/ω}}_{\text{2}}$, and ω₂ indicates the angular velocity of rotation of the mill pot 21 with respect to the revolution of the main shaft 22 so that the composite milling acceleration ratio G applied to the internal part of the mill pot is at least 30 to 90 when calculated by the expression below.

In this context, "a max" shows composite milling acceleration (m/s²) and the expression relating G, a max and g is;
G = a max/g

**Table 1**

| G | ω₁(1/s) | K(m) | M(m) | ω₂(1/s) | R | amax (m/s²) |
|---|---|---|---|---|---|---|
| 30 | 25.0 | 0.52 | 0.075 | 34.0 | 1.36 | 293 |
| 90 | 43.3 | 0.52 | 0.075 | 59.0 | 1.36 | 883 |

It is to be noted that the relationship between the rotation of the millpot 21 and the revolution of the main shaft 22 is also one of the important elements.

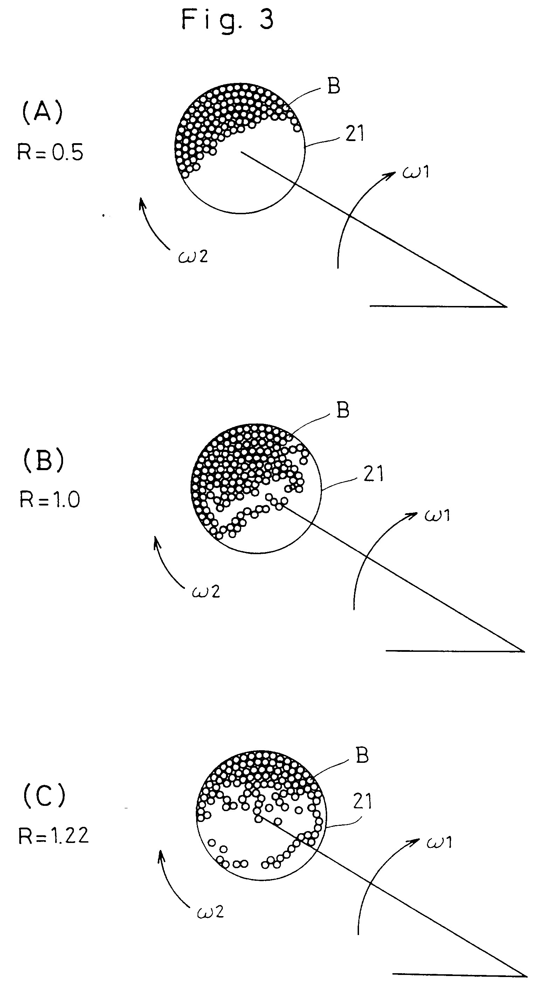

Figures 3(a), (b) and (c) show the movement of balls B and the ratio of angular velocities between the revolution of the main shaft and rotation of the mill pot. Figure 3a shows the state of the mill pot when the angular velocity of revolution of the main shaft is established as ω₁, the relative angular velocity of rotation of the mill pot as ω₂ and the ratio R between the two velocities = ω₂/ω₁, and in which R is 0.5. In this state, the balls surge in a group forming a unit along the outer periphery of the mill pot. A compressive force and a shearing force are effectively applied to the metals located between the outer periphery and the balls B or between the balls themselves in such a manner as to cause satisfactory mechanical alloying. The behaviour of the balls is shown in Figure 3(b) when R=1.0 and in Figure 3(c) when R=1.22. It is noted that when the ratio R of the angular velocities becomes relatively large, some of the balls separate from the outer periphery of the mill pot and move around the inside of the mill pot. Thus a part of the energy is wasted or lost due to collisions amongst the balls which is undesirable for the process of mechanical alloying. This undesirable phenomenon is more serious when R becomes large and when R exceeds 1.9 no hydrogen absorption alloy of high alloying percentage can be obtained even though the composite milling acceleration ratio G is more than 30. In view of the foregoing, it is preferable that R is set to 1.36 and more preferably, in the range of 1.5 to 0.5.

In the foregoing embodiment, Mg₂Ni was selected from the group of hydrogen absorption alloys. Particles of Ni with an average particle size of 9µ and particles of Mg with an average particle size of 85µ were weighed to give the predetermined composition ration of the desired alloy and were placed in the mill pots. Balls of high carbon Cr bearing steel each being 3 to 5mm in diameter were also placed in the mill pot to occupy 30 % of the space inside each mill pot.

The composite milling acceleration ratio G was set to 30 for one series of results and to 90 for another. A plurality of samples were prepared varying the operation time of the mill in the range of 20 minutes to 12 hours. Then inspections were carried out on each of the prepared samples by various kinds of inspection equipments to determine whether or not single phase Mg still remained.

The following results were obtained for samples prepared by operating the mill pots for 12 hours with G=30 :

### (1) PCT line diagram :

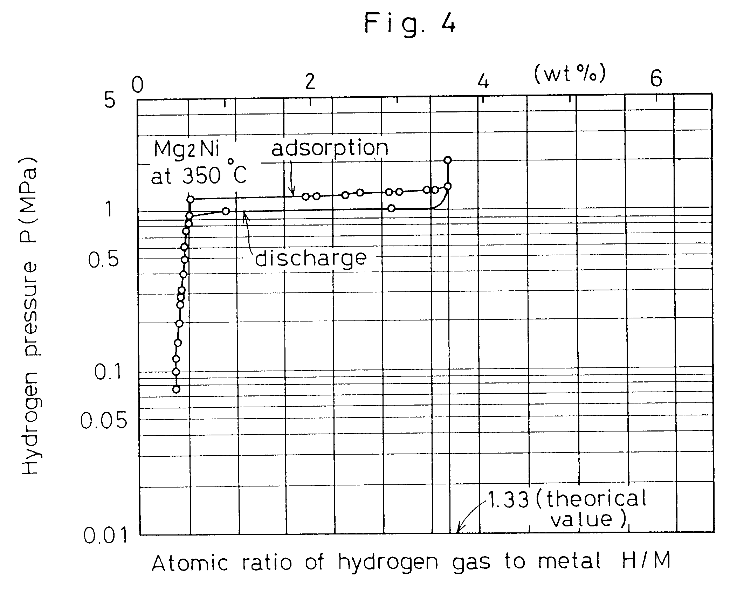

Figure 4 is a PCT line diagram of the samples, and in contrast to the prior art as shown in Figure 9, the lines of discharge and absorption of hydrogen gas are almost horizontal, which means that phase changes take place alternately between Mg₂Ni and Mg₂NiH₄ and no single phase Mg of low reaction speed is present.

### (2) DTA line diagram:

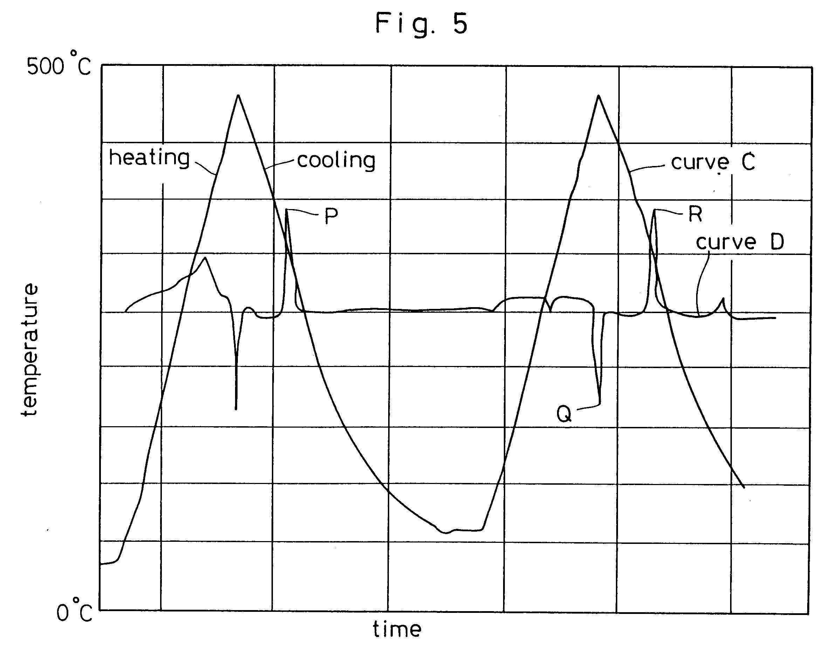

Figure 5 is a DTA line diagram obtained under the same inspection conditions as Figure 10 which shows the prior art results. Peaks of absorption and discharge of hydrogen gas at the time of cooling and heating are seen at points P, Q and R and these points are all single peaks and not, as seen in Figure 10, double peaks representing the phase change of MgH₂-Mg.

### (3) X-ray diffraction analysis:

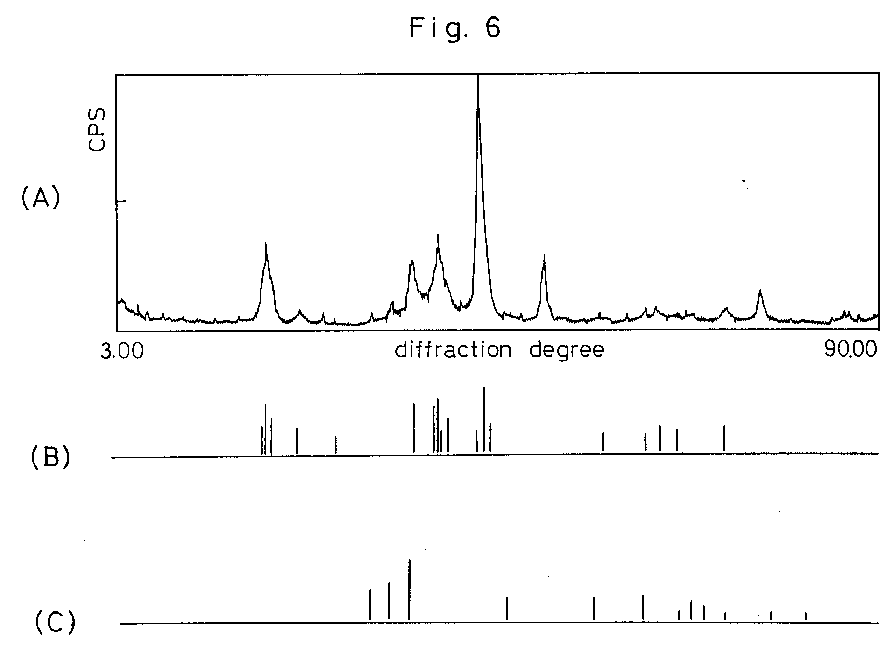

Figure 6 (a) is an X-ray diffraction analysis diagram, Figure 6(b) is a standard diagram of X-ray diffraction of Mg₂Ni and Figure 6(c) is that of Mg. In these diagrams, the x-axis shows the diffraction degree and the y-axis shows the strength of the X-ray (indicated by the number of electric pulses per second (CPS). The maximum peak shown in Figure 6(b) is also found in Figure 6(a) but the maximum peak shown in Figure 6(c) is hardly found in Figure 6(a), which means that there remains substantially no single phase Mg in the sample and the sample is satisfactorily alloyed in the composition of Mg₂Ni.

### (4) Mapping diagram of Mg and Ni.

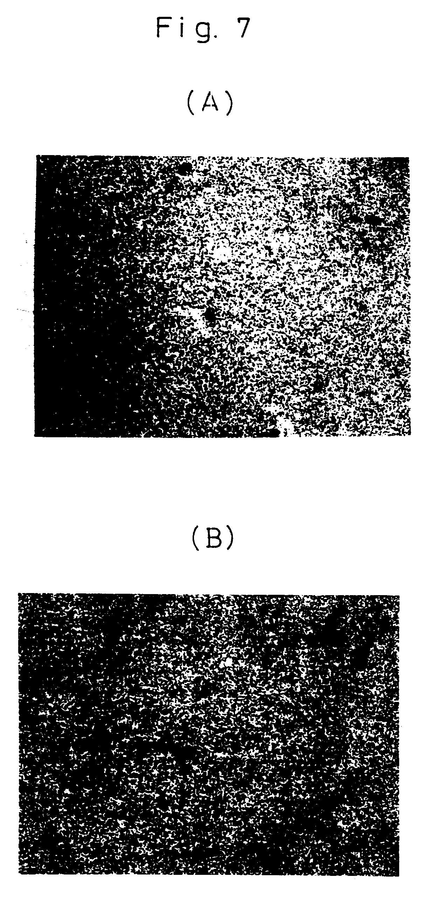

Figure 7(a) is a mapping diagram of Ni and Figure 7(b) is that of Mg. Both were taken by electronic probe microanalyzer, i.e. microphotographs (of 500 magnifications) showing the distribution of each component. In Figure 7(a) white portions show the existence of Ni and in Figures 7(b) white portions show the existence of Mg. It can be seen that in both diagrams each component is almost totally evenly and uniformly distributed and there is no large area in which single phase Ni or Mg is concentrated.

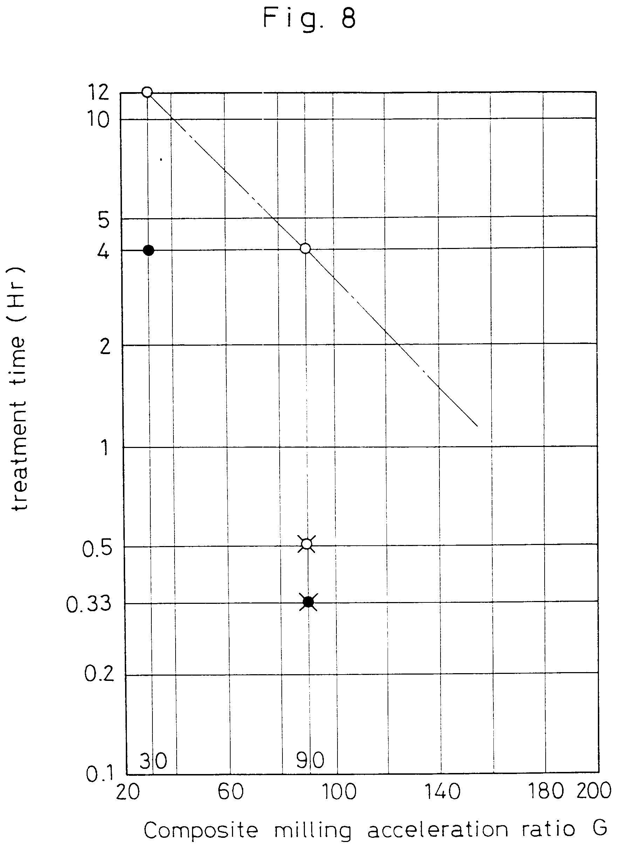

Figure 8 is a diagram showing the relationship between the composite milling acceleration ratio G obtained from the results of the foregoing tests (1) to (4) which were applied to every sample and the time required for the treatment in the mill pot from the view point of alloying results. White points indicate samples of successful alloying wherein no single phase Mg was found, whilst black points indicate samples of incomplete alloying wherein single phase Mg still remained.

From the results of the foregoing tests, it may be generally said that alloying is successfully achieved after performing the process for 12 hours when G is 30, and after performing the process for 4 hours when G is 90. In one of the tests, alloying was achieved after performing the process for only 30 minutes when G is 90.

Further studies and tests may be necessary in order to clarify this relationship.

## Claims

1. A method of producing a hydrogen absorption alloy with a high percentage of alloy, the method comprising the steps of: placing fine particles (M) of two or more kinds of metals adapted for alloying to form a hydrogen absorption alloy into one or more mill pots (21) of a high speed planetary mill (1), providing the internal part of the or each mill pot (21) with a non-oxidising atmosphere and applying an acceleration of more than 30 times the acceleration due to gravity to the or each mill pot (21) for mixing, milling and dispersion of the fine particles (M), the method being characterised by placing milling balls together with the fine particles in the or each mill pot (21), and operating the mill (1) such that a main shaft (22) thereof rotates in a first direction and the or each mill pot (21) rotates around its own axis in said first direction, wherein the ratio (R) of the relative angular velocity of rotation of the or each mill pot (ω₂) to the angular velocity of rotation of the main shaft (ω₁) is in the range of 0.5 to 1.5.

2. A method of producing a hydrogen absorption alloy according to Claim 1, wherein the non-oxidizing atmosphere is achieved by filling the mill pots (21) with Ar gas, He gas or N₂ gas.

3. A method for producing a hydrogen absorption alloy according to Claim 1 or 2, wherein one or more of the two or more kinds of metals is selected from a group including Mg, Ca, La, mischmetal and Ti, while the remaining one or more of the two or more kinds of metals is selected from a group including Ni, Al, V, Cr, Fe, Co, Zr, Cu, and Mn.

## Patentansprüche

1. Verfahren zum Herstellen einer Wasserstoff-Absorptions-Legierung mit einem hohen Legierungsanteil, wobei das Verfahren die folgenden Schritte umfaßt:
Anordnen feiner Partikel (M) zweier oder mehrerer Arten von Metallen, die für das Legieren zum Ausbilden einer Wasserstoff-Absorptions-Legierung geeignet sind, in ein oder mehrere Mahlgefäß(e) (21), einer Hochgeschwindigkeits-Planetenmühle (1), Versorgen des Innenteils des oder jedes Mahlgefäßes (21) mit einer nichtoxidierenden Atmosphäre, und Aufbringen einer Beschleunigung von mehr als dem 30-fachen der Schwerkraftsbeschleunigung an das oder jedes Mahlgefäß (21) zum Mischen, Mahlen und Dispergieren der feinen Partikel (M), wobei das Verfahren **gekennzeichnet ist** durch Einsetzen von Mahlkugeln in das oder jedes Mahlgefäß (21) zusammen mit den feinen Partikeln und Betreiben der Mühle (1) in solcher Weise, daß eine Hauptwelle (22) derselben sich in einer ersten Richtung dreht und das oder jedes Mahlgefäß (21) sich um seine eigene Achse in der ersten Richtung dreht, wobei das Verhältnis (R) der relativen Winkelgeschwindigkeit (ω₂) der Drehung des oder jedes Mahlgefäßes zu der Winkelgeschwindigkeit (ω₁) der Drehung der Hauptwelle im Bereich von 0,5 bis 1,5 liegt.

2. Verfahren zum Herstellen einer Wasserstoff-Absorptions-Legierung nach Anspruch 1, **dadurch gekennzeichnet,** daß die nichtoxidierende Atmosphäre erhalten wird durch Füllen der Mahlgefäße (21) mit Ar-Gas, He-Gas oder N₂-Gas.

3. Verfahren zum Herstellen einer Wasserstoff- Absorptions-Legierung nach Anspruch 1 oder 2, **dadurch gekennzeichnet,** daß eines oder mehr der zwei oder mehr Arten von Metallen aus einer Gruppe ausgewählt wird, die Mg, Ca, La, Mischmetall und Ti enthält, während das restliche eine oder mehrere der beiden oder mehr Arten von Metallen aus einer Gruppe ausgewählt wird, die Ni, Al, V, Cr, Fe, Co, Zr, Cu und Mn enthält.

## Revendications

1. Procédé pour la production d'un alliage d'absorption d'hydrogène ayant un pourcentage élevé en alliage, le procédé comprenant les étapes consistant à : mettre en place des particules fines (M) de deux ou plus de deux espèces de métaux convenant à l'alliage pour former un alliage d'absorption d'hydrogène dans un ou plusieurs creusets de broyeur (21) d'un broyeur planétaire à vitesse élevée (1), en dotant la partie intérieure du ou de chaque creuset de broyeur (21) d'une atmosphère non oxydante et en appliquant une accélération supérieure à 30 fois l'accélération due à la gravité du ou de chaque creuset de broyeur (21) pour mélanger, broyer et mettre en dispersion les particules fines (M), le procédé étant caractérisé par la mise en place de boulets de broyage conjointement avec les fines particules dans le ou dans chaque creuset de broyeur (21) et la mise en action du broyeur (1) de telle sorte que son arbre principal (22) tourne dans une première direction et le ou chaque creuset de broyeur (21) tourne autour de son propre axe dans la première direction, le rapport (R) entre la vitesse angulaire relative de rotation du ou de chaque creuset de broyeur (ω₂) et la vitesse angulaire de rotation de l'arbre principal (ω₁) se situe dans la plage de 0,5 à 1,5.

2. Procédé pour la production d'un alliage d'absorption d'hydrogène selon la revendication 1, dans lequel l'atmosphère non oxydante s'obtient par remplissage des creusets de broyeur (21) avec du gaz Ar, du gaz He ou du gaz N₂.

3. Procédé pour la production d'un alliage d'absorption d'hydrogène selon la revendication 1 ou 2, dans lequel un ou plusieurs parmi les deux ou plus de deux espèces de métaux est choisi dans un groupe comprenant Mg, Ca, La, du mischmétal ou ferrocérium et Ti, tandis que le reste ou davantage des deux ou plus de deux types de métaux est choisi dans un groupe comprenant Ni, Al, V, Cr, Fe, Co, Zr, Cu et Mn.
